# EUROPEAN PATENT SPECIFICATION

(11) **EP 2 168 351 B1**
(45) Date of publication and mention of the grant of the patent: **20.11.2019**
(21) Application number: 07747342.9
(22) Date of filing: 22.06.2007
(51) Int. Cl.: H04L 29/06

(54) **METHOD OF PROVIDING A SERVICE THROUGH A USER EQUIPMENT UNIT IN AN IP MULTIMEDIA SUBSYSTEM TELECOMMUNICATIONS NETWORK, INCLUDING A USER DATABASE SERVER, SERVICE POLICY SERVER AND APPLICATION SERVER FOR USE WITH SAID METHOD**
VERFAHREN ZUM BEREITSTELLEN EINES DIENSTES DURCH EINE BENUTZERGERÄTEEINHEIT IN EINEM IP-MULTIMEDIASUBSYSTEM-TELEKOMMUNKATIONSNETZ EINSCHLIESSLICH EINES BENUTZERDATENBANKSERVERS, EINES DIENSTRICHTLINIENSERVERS UND EINES ANWENDUNGSSERVERS ZUR VERWENDUNG MIT DEM VERFAHREN
PROCÉDÉ DE FOURNITURE D'UN SERVICE PAR LE BIAIS D'UNE UNITÉ D'ÉQUIPEMENT UTILISATEUR DANS UN RÉSEAU DE TÉLÉCOMMUNICATIONS DE SOUS-SYSTÈME MULTIMÉDIA IP, COMPRENANT UN SERVEUR DE BASE DE DONNÉES UTILISATEUR, UN SERVEUR DE RÈGLES DE SERVICE ET UN SERVEUR D'APPLICA

(43) Date of publication of application: 31.03.2010
(73) Proprietor: Telefonaktiebolaget LM Ericsson (publ), 164 83 Stockholm (SE)
(72) Inventor: NOLDUS, Rogier, August, Caspar, Joseph, NL-5052 BM Goirle (NL); FREIRE, Emilio, E-28012 Madrid (ES)
(74) Representative: Ericsson
(86) International application number: PCT/NL2007/000160
(87) International publication number: WO 2009/002143

(56) References cited:
- WO-A-2007/009498
- US-A1- 2007 067 470
- "Digital cellular telecommunications system (Phase 2+); Universal Mobile Telecommunications System (UMTS); IP Multimedia Subsystem (IMS) Sh interface; Signalling flows and message contents (3GPP TS 29.328 version 6.12.0 Release 6); ETSI TS 129 328" December 2006 (2006-12), ETSI STANDARDS, EUROPEAN TELECOMMUNICATIONS STANDARDS INSTITUTE, SOPHIA-ANTIPO, FR , XP014036409 ISSN: 0000-0001 page 15, paragraph 6.1.4 page 24, paragraph B.1.1
- "3rd Generation Partnership Project; Technical Specification Group Core Network and Terminals; IP Multimedia (IM) Subsystem Cx and Dx interfaces; Signalling flows and message contents (Release 7)", 3GPP STANDARD; 3GPP TS 29.228, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.6.0, 1 June 2007 (2007-06-01), pages 1-61, XP050372476,

## Description

### Field of the invention

The present invention relates to a method of providing a service through a user equipment (UE) unit in an Internet protocol (IP) multimedia subsystem (IMS) telecommunications network, wherein said service is provided using an application server (AS) in said telecommunications network, said method comprising a step of performing a user authorisation query on a user database server for authorising registration of said user equipment unit in said telecommunications network. The invention also relates to a user database server, a service policy server, an application server, and an interrogating call session control function (I-CSCF) entity for use in the method described above.

The method as described above is used in an Internet protocol (IP) multimedia subsystem (IMS) type of network for providing services to users of such a telecommunications network. An IMS network is an architectural framework for delivering IP multimedia services to end users. It is initially launched by standardization organisation 3GPP, and it enables the provisioning of Internet services through different type of telecommunications networks, amongst others general packet radio service (GPRS) networks, (wireless) local area networks (LAN) and other network types.

A main advantage of IMS networks is the decentralised nature of service provisioning, using application servers that may be based anywhere in the telecommunications network. Traditionally, in regular intelligent network (IN) type telecommunications networks, services were provided by service control points (SCPs) that were connected to mobile switching centres (MSCs) in the network. However in an IMS type telecommunications network, services can be provided through application servers across the whole of the network, and even from application servers that are located in other telecommunications networks outside the serving IMS network.

IMS allows its users to register at various locations, using different forms of access. Communication signals from a user equipment unit are typically conveyed to the IMS core network through an access network of any particular type. A user can connect to the IMS network through traditional mobile access types (wide band code division multiple access (W-CDMA) code division multiple access 2000 (CDMA 2000), global system for mobile communications (GSM), general package radio service (GPRS), etc.), fixed access types (such as digital subscriber line (DSL), cable modems, ethernet, etc. or wireless access types such as wireless local area network (WLAN), worldwide interoperability for microwave access (WiMAX), etc.

A telecommunications session with a user equipment unit through the IMS telecommunications network is normally preceded by a registration process, wherein a user authorisation query (user authorisation request (UAR) and user authorisation answer (UAA)) is performed on a user database server, typically a home subscriber server (HSS) in the IMS network. The user database server is a repository containing user profiles, and indicates to the querying network node, which is typically an interrogating call session control function (I-CSCF), the location in the IMS network of a serving call session control function (S-CSCF), which functions as the central node of the signalling network of IMS. Typically registration is then continued by the S-CSCF by performing a multimedia authentication query (multimedia authentication request (MAR) and multimedia authentication answer (MAA)) on said user database server. This is performed in order to retrieve user authentication data from the user database server or home subscriber server (HSS). This user authentication process by the I-CSCF is for example described in 3GPP TS 29.228 V7.6.0.

Once authorisation of the registration of the user is granted, and the registration process has been completed, the S-CSCF may forward the registration details of the user to various application servers for providing services to the user.

The AS may then obtain user details from the HSS via the Sh interface. This mechanism is described in 3GPP TS 29.328 V6.12.0/ETSI TS 129 328 V6.12.0. The services standard applicable for a user are maintained by the HSS as a set of initial filter criteria. These are provided to the S-CSCF serving the user. This mechanism is described for example in US2007/006747. In the case of multiple and redundant application servers that could provide the same service, a server is allocated for the user and this is notified to the HSS. The HSS then notifies the S-CSCF serving the user of the contact address of the allocated server. Such a mechanism is for example disclosed in WO 2007/009498.

A disadvantage of the above registration method is that once a user is registered through a regular registration method with the IP multimedia subsystem telecommunications network, no further usage conditions for services can be imposed.

One example is the case wherein an IMS telecommunications network offers the possibility of wireless office services. Enterprises may offer the wireless office service to their subscribers. One of the restrictions for providing the service could be that the service may only be provided if users access the IMS from certain locations (e.g. from home or from the office). At present the application server providing the wireless office service is not able to enforce such a policy on the use of the service, nor can this be done by any of the other network nodes involved in the provisioning of the service.

Another example could be a service wherein users of mobile terminals, the subscriptions for which are paid for by their employer, would be restricted to the use of certain services depending on their current location and privileges. For instance an enterprise may provide cell phones to its employees but wants to restrict use of the cell phone to a certain area, in order to control costs. For example, more privileged users may be enabled to use their mobile phones everywhere and more restricted users may be restricted to use their office cell phones only from within a certain country, or within a certain metropolitan area.

Another example is a service that can only be provided to a user through one mobile equipment unit at a time. For example, if a user makes use of the service through a personal computer connected to the IMS network via an assymetric digital subscriber line (ADSL) connection, the same service cannot be provided to the same user at the same time via his mobile terminal.

Service provisioning policies like the above examples, are very difficult or even impossible to enforce in the present IP multimedia system telecommunications network architecture (IMS architecture).

### Summary of the invention

It is an object of the present invention to enable the use of advanced service provisioning policies in an IMS telecommunications network.

This and other objects are achieved by the present invention in that there is provided a method, according to independent claim 1, of providing a service through a user equipment (UE) unit in an internet protocol (IP) multimedia subsystem (IMS) telecommunications network, wherein said service is provided using an application server (AS) in said telecommunications network, said method comprising a step of performing a user authorisation query on a user database server for authorizing registration of said user equipment unit in said telecommunications network, and wherein said method further comprises a step of performing a service authorisation query on a service policy server for authorizing use of said service through said user equipment unit.

The service policy server may be a separate network entity, or may be implemented as a function of an application server. Because the method of the present invention involves a step of performing a service authorisation query, either on the service policy server or on the application server itself, the service policy server or application server is enabled to authorise or restrict use of the service based on usage policy and usage restrictions for the service. Authorisation of the use of services becomes completely service dependent where necessary, while at the same time the flexibility of enabling service provisioning to users on the IMS telecommunications network regardless of any specific policies continues to be possible in the conventional way.

In order to compose the query, the user database server may use any of the information from the user authorisation query that was already performed. In particular, in an embodiment of the invention, it is possible that the service authorisation query is simply a copy of the user authorisation query, e.g. as received by the home subscriber server (HSS) from the interrogating call session control function (I-CSCF). In an IMS telecommunications network, the user authorisation query already contains valuable information that can be used by a service policy server or an application server for authorising service provisioning.

Since it is the user database server that receives and processes the user authorisation query, in a preferred embodiment of the present invention, it is also the user database server that performs the server authorisation query. This means that the user database server composes a suitable service authorisation query, and transmits this to the suitable application server or service policy server. As mentioned above, the user database server may use any information available to him, e.g. from the user authorisation query that was earlier received.

The user database server in the Internet protocol (IP) multimedia subsystem (IMS) telecommunications network, may be a home subscriber server (HSS) which is typically performing this function in a standard IMS network. The home subscriber server in an IMS network, uses the DIAMETER protocol for conveying the user authorisation query (consisting of a user authorisation request (UAR) and a user authorisation answer (UAA)) between the interrogating call session control function (I-CSCF) and the home subscriber server. The DIAMETER protocol is typically suitable for performing authentication, authorisation and accounting methods, and will therefore be useful as well for performing the service authorisation query on the service policy server or application server. As will be appreciated, any other suitable protocol, such as RADIUS (predecessor of DIAMETER) may also be used for performing the query on the service policy server or application server.

In accordance with a further embodiment of the present invention, performing the service authorisation query comprises the steps of forwarding said service authorisation query to said service policy server, said service policy server verifying whether provisioning of said service to said user equipment unit is allowed, said service policy server returning a service authorisation response, wherein said response indicates whether or not provisioning of said service to said user equipment unit is allowed.

In particular, the user authorisation query may, in accordance with another embodiment, include the exchange of service authorisation data, wherein said service authorisation data is selected from a group comprising a contact network address of said user equipment unit in said telecommunications network, and access network information data of an access network used for conveying communications signals between said user equipment unit and said telecommunications network. Since the user authorisation query may be performed by an interrogating call session control function (I-CSCF) in said telecommunications network, the service authorisation data may in be provided by said interrogating call session control function (I-CSCF). The service authorisation data may, in accordance with a preferred embodiment be included in said service authorisation query, as this enables advanced options for the service policy server to authorise service provisioning conditionally, e.g. based on access network type or based on an analysis of the contact address.

In the IMS architecture, the access networks could be mobile networks, fixed networks, wireless access networks (such as wireless local area networks (WLAN)), etc. The access network information data may upon receipt by the user database server be used for composing the service authorisation query to be sent to the service policy server or application servers, as suggested above. The access network information data may in that case indicate what type of access network is used, or may provide insight in the user's location on the access network (i.e. a geographical location from where the user is using its user equipment units). The access network information data sent along with the user authorisation query and the service authorisation query may consist of the P-access-network-info parameter known within the session initiation protocol (SIP), the protocol that is mainly used in the signalling of the IMS telecommunications network. This parameter contains valuable information that may be used in the service authorisation process described.

The service policy server may be identified by said user database server, e.g. based on information available to said user database server. In accordance with another embodiment of the present invention, the user database server is a repository for subscriber profiles of user equipment units, and therefore reposits a subscriber profile for the user equipment unit that (may) require(s) services from the application server. In this embodiment, the subscriber profile present in the user database server may comprises an indication on whether or not the service authorisation query is required to be performed for the application server involved, and information on which service policy server to use (or an indication that the service authorisation query may be performed directly on the application server. In that case, also contact details of the relevant application server may already be stored in the user profile.

As already suggested, the home subscriber server (HSS) in the IMS telecommunications network may send the service authorisation query to a dedicated service policy server, or to an application server. The service policy server could be a separate network entity, e.g. operatively connected to the user database server for exchanging data therewith, or it could be implemented as a functional entity within the application server, providing an integrated solution.

An application server may be arranged for only providing a service in case the service authorisation procedure has been completed successfully, and service provisioning is allowed through the user equipment unit. Moreover, a response that is returned from the service policy server or application server may comprise a service restriction indication, indicating restrictions to be imposed on provisioning of said service. This enables service providers to impose restrictions on service provisioning, such as restrictions with respect to location in the network or the access network used by a user to access the IMS telecommunications network.

In accordance with a second aspect of the present invention, there is provided a user database server, according to independent claim 11, for use in a method according to any of the previous claims, wherein said user database server comprises means for receiving a user authorisation query for authorizing registration of a user equipment unit in a telecommunications network, and means for performing a service authorisation query on an application server for authorizing use of a service provided by said application server through said user equipment unit.

In accordance with a third aspect of the present invention there is provided a service policy server, according to independent claim 14, for use in a method in accordance with the first aspect of the invention, said service policy server comprising means for providing a service authorisation query on an application server for authorizing use of a service provided by said application server through said user equipment unit.

In accordance with a fourth aspect of the present invention, there is provided an I-CSCF according to independent claim 15.

Further embodiments are defined in the dependent claims.

The present invention will herein below further be elucidated with a detailed description of preferred embodiments, and with reference to the enclosed drawings. The intention of providing the drawings and the detailed description is to increase understanding of the invention with the person skilled in the art and the detailed description below is not meant to be taken restrictive in any sense. The invention is only restricted by the appended claims to the application.

### Brief description of the drawings

Figure 1 schematically illustrates a telecommunication system of the present invention, in particular the signalling plane thereof.
Figure 2 schematically illustrates the method of the present invention.

### Detailed description of the drawings

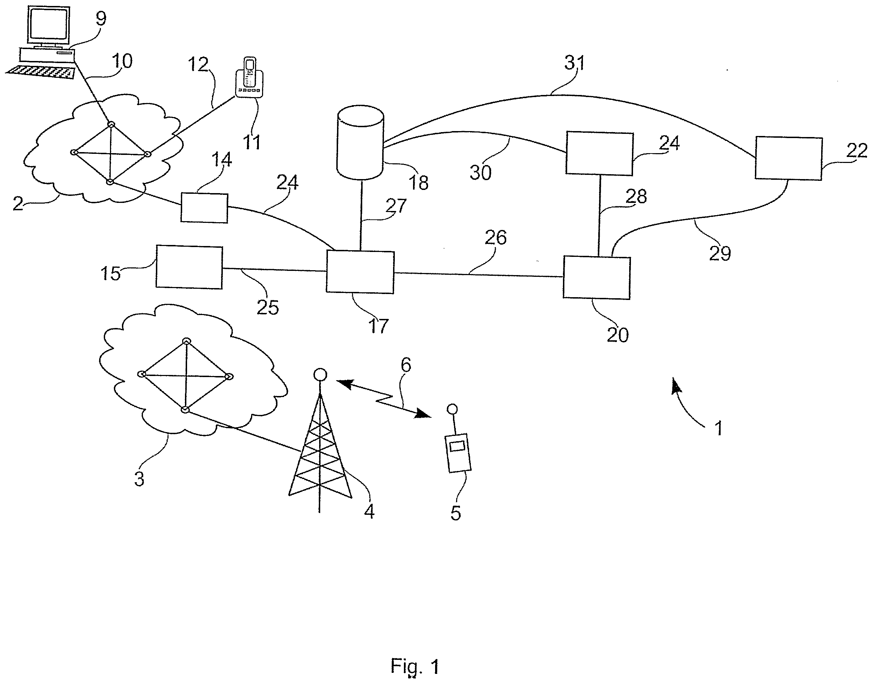

In figure 1, an IP multimedia subsystem (IMS) telecommunication network 1 is schematically illustrated. Since the method of the present invention usually takes place in the signalling plane thereof, figure 1 in particular illustrates the signalling plane of the telecommunication network wherein the present invention is implemented.

Telecommunication system 1 consists of multiple access networks schematically indicated with reference numerals 2 and 3. Access network 3 is a mobile telecommunications network consisting of base stations 4, for providing telecommunication services to a plurality of users, via mobile terminals such as mobile terminal 5. Mobile terminal 5 is connected with base station 4 through a wireless link 6. In the IP multimedia subsystem (IMS) telecommunications network 1, a proxy call session control function (P-CSCF) 15 separates the mobile access network 3 from the core network.

Access network 2 provides asymmetric digital subscriber line (ADSL) services via ADSL connection 10 to a personal computer system 9. Through the same access network 2, but logically separated therefrom, access network 2 also provides telecommunication services to a plurality of users via fixed terminals such as terminal 11, i.e. using integrated services digital network (ISDN) link 12. In the IP multimedia subsystem (IMS) telecommunications network 1, a session border gateway (SBG) 14 separates the fixed line access network 2 from the core network.

The core network of telecommunications network 1 comprises, amongst others, an interrogating call session control function (I-CSCF) 17, a serving call session control function (S-CSCF) 20, and a home subscriber server (HSS) 18. Value added services in the IMS network 1 are provided by a plurality of application servers, such as application servers (AS) 21 and 22.

Communication in the signalling plane between SBG 14 and I-CSCF 17, between the P-CSCF 15 and the I-CSCF 17, between the I-CSCF 17 and the S-CSCF 20, and between the S-CSCF 20 and both application servers (AS) 21 and 22, i.e. on links 24, 25, 26, 28 and 29 respectively, takes place via the session initiation protocol (SIP). However, for communication between the I-CSCF 17 and HSS 18, the DIAMETER protocol is the most suitable protocol to use, since it is specifically designed for authentication, authorisation and accounting purposes.

If a user wants to access the IP multimedia subsystem (IMS) network 1 through his mobile terminal 5, registration with the IMS network by the mobile terminal 5 is required. Allowability of an access request by ,mobile terminal 5 must be verified with home subscriber server 18. Therefore, a SIP registration procedure (IMS registration procedure) is initiated from mobile terminal 5 through proxy call session control function (P-CSCF) 15 and interrogating call session control function (I-CSCF) 17. From I-CSCF 17, a user authorisation query will be performed on home subscriber server 18 using the DIAMETER protocol as indicated above. The user authorisation query consists of a user authorisation request (UAR) sent from the I-CSCF 17 to the HSS 18, and a user authorisation answer (UAA) sent in return by the HSS 18 to the I-CSCF 17.

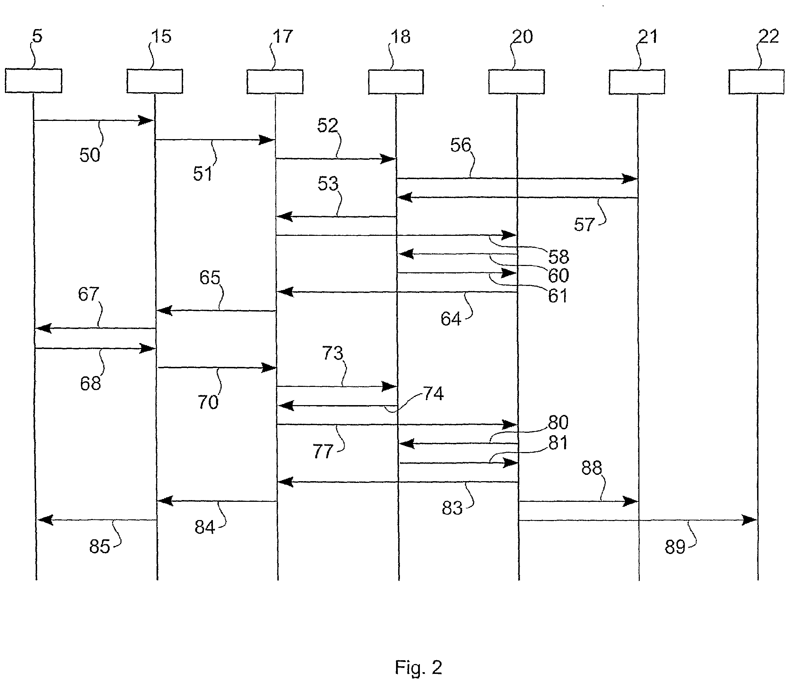

The SIP registration procedure proposed by the present invention is schematically illustrated in figure 2. Figure 2 must be read in combination with figure 1, and illustrates communication between the different nodes and parties involved in the SIP registration procedure, in accordance with the present invention. The entities shown in figure 1 for which the communication procedure is illustrated in figure 2 have been given the same reference numerals in figure 2.

As indicated above, a SIP registration request 50 is sent from mobile terminal (MT) 5 to proxy call session control function (P-CSCF) 15. Then, from P-CSCF 15 to I-CSCF 17 the SIP registration request is forwarded in step 51. Interrogating call session control function (I-CSCF) 17 will perform a user authorisation query on home subscriber server (HSS) 18. Therefore, I-CSCF 17 sends a user authorisation request 52 to HSS 18. Typically HSS 18 responds to the UAR 52 by returning a user authorisation answer (UAA) 53 back to I-CSCF 17. However, in accordance with the present invention, HSS 18 may perform an additional service authorisation query on at least one of the application servers 21 or 22. This is illustrated in figure 2, by HSS 18 sending a service authorisation request 56 to AS 21, and AS 21 returning a service authorisation answer 57 back to HSS 18.

The logic behind the above procedure is that the home subscriber server (HSS) 18 receives detailed registration information regarding mobile terminal 5, that can be used for determining whether or not the policy of the service provided by application server 21 allows service provisioning to mobile terminal 5 under the current conditions. This detailed registration information is communicated to application server 21 through the service authorisation query consisting of the service authorisation request 56 which provides the required information to application server 21, and the service authorisation answer 57 which either permits or denies service provisioning to this user. Home subscriber server 18 may perform a service authorisation query on any application server that requires or supports this feature. Therefore, a plurality of service authorisation queries may be performed on different application servers by home subscriber server 18, and before a user authorisation answer (UAA) is sent back from HSS 18 to I-CSCF 17 in step 53, HSS 18 may be aware of all services that may be provided to the mobile terminal 5 under the present conditions, and also of all the services that cannot be provided to the mobile terminal under the current conditions, for which a service denial was received. This information may be passed onto I-CSCF 17, and from there back to the user through mobile terminal 5.

After having received the user authorisation answer in step 53, the SIP registration procedure continues by I-CSCF forwarding the SIP registration request to the S-CSCF 20, which was selected by the I-CSCF 17 in reaction to the receipt of the UAA provided in step 53 by HSS 18. S-CSCF 20 performs a multimedia authentication query on home subscriber server 18. The multimedia authentication query consists of a multimedia authentication request (MAR) 60 and a multimedia authentication answer (MAA) 61, as is known to the skilled person. Steps 60 and 61 are performed in order to provide the serving call session control function (S-CSCF) with relevant user information from the home subscriber server (HSS) 18. In particular, during the multimedia authentication procedure the S-CSCF 20 may receive details for challenging authorisation of the mobile terminal 5. Once this information is received in step 61, the SIP registration procedure continues with step 64, wherein authorisation of the mobile terminal is challenged by said serving call session control function (S-CSCF) 20 sending an "unauthorised" message back to the I-CSCF 17. The I-CSCF 17 forwards this "unauthorised" message in step 65 to the proxy call session control function (P-CSCF) 15, which forwards it again in step 67 to mobile terminal 5.

The "unauthorised" message contains information for the mobile terminal 5, which is used by mobile terminal 5 to determine a suitable response to the challenge provided by S-CSCF 20. A further SIP request 68, containing the response to the challenge, is then forwarded to the P-CSCF 15, and from there in step 70 to I-CSCF 17. I-CSCF 17 performs another user authorisation query on HSS 18.

The second SIP request, containing the response to the challenge, is then sent by I-CSCF 17 to S-CSCF 20. S-CSCF 20 verifies whether the response to the challenge is correct and authorises access to the user, by sending a server assignment request SAR 80 to HSS 18 acknowledging registration of mobile terminal 5. HSS 18 provides user details back to S-CSCF 20 in a server assignment answer (SAA) represented by step 81. The user details consists, amongst others, of the initial filter criteria (IFC). IFC are used for invoking one or more services in an IMS application server, during an IMS session by the user.

After having received SAA 81, S-CSCF 20 acknowledges acceptance to mobile terminal 5, by sending an "accept" message in step 83 back to I-CSCF 17, which forwards this "accept" message to P-CSCF 15 via step 84, and from P-CSCF 15 to mobile terminal via step 85.

Meanwhile, in steps 88 and 89, S-CSCF 20 performs a SIP registration with the application servers that allow service provisioning to mobile terminal 5. S-CSCF 20 is made aware of the application servers that have allowed service provisioning during the service authorisation query described hereinabove, when HSS 18 provides a server assignment answer (SAA) in step 81 to S-CSCF 20. As will be appreciated by the skilled person, the SIP registration will only be performed by S-CSCF with application servers that have acknowledged service provisioning during the service authorisation query between HSS 18 and the application service (21 and 22). The application servers that have received a service authorisation query from the HSS, step 56, may provide the HSS with a restriction on the IFC. The result of a restriction on the IFC may be that the application server will not receive the IMS registration procedure from S-CSCF. An additional result of a restriction on the IFC may be that the application server will not be invoked for SIP sessions initiated to or from the subscriber.

Information that may be passed on to the application servers during the service authorisation query described herein above, may comprise any information that is forwarded to the home subscriber server (HSS) 18 during the user authorisation query between the I-CSCF 17 and the HSS 18. In addition, HSS 18 may add any information that is already available in the HSS 18, and may be of relevance for determining allowability of service provisioning. HSS 18 may add the contact address for either one or both application servers 21 and 22, or may add information regarding the access network used by mobile terminal 5, such as the P-Access-Network-Information parameter known to the skilled person. The contact address for application server 21 and/or 22, and the P-Access-Network-Information parameter, may have been included in the user authorisation query performed on HSS 18 by I-CSCF 17 in step 52, in accordance with the invention.

Further to this, HSS 18 may also contain addresses of application servers that require a service authorisation query to be performed, before service is allowed. This information may be stored in the user profile present in HSS 18 for mobile terminal 5.

As will be appreciated, the above example has been explained and illustrated with regards to a SIP registration request performed by mobile terminal 5. It will be appreciated that this request may be performed by any user equipment unit, such as personal computer 9, or fixed terminal 11 indicated in figure 1.

The invention has been described above by the aid of some of its embodiments. However, the description is not to be regarded as constituting a limitation, but the embodiments of the invention may be varied within the scope of the invention which is only defined by the following claims.

## Claims

1. Method of providing a service through a user equipment, UE, unit in an internet protocol, IP, multimedia subsystem, IMS, telecommunications network, wherein said service is provided using an application server, AS, in said telecommunications network, said method comprising a step of performing a user authorisation query on a user database server for authorizing registration of said user equipment unit in said telecommunications network, and **characterized in that** said method further comprises a step of said user database server performing a service authorisation query on a dedicated service policy server for authorizing use of said service through said user equipment unit, wherein said dedicated service policy server is an entity separate from said AS providing the service

2. Method according to claim 1, wherein said service authorisation query is composed based on information exchanged during said user authorisation query or is a copy of said user authorisation query.

3. Method according to any of the previous claims, wherein performing said service authorisation query by said user database server comprises the steps of:
- communicating said service authorisation query to said service policy server;
- said service policy server verifying whether provisioning of said service to said user equipment unit is allowed;
- said service policy server returning a service authorisation response to said user database server, wherein said response indicates whether or not provisioning of said service to said user equipment unit is allowed.

4. Method according to any of the previous claims, wherein said user authorisation query includes the exchange of service authorisation data, wherein said service authorisation data is selected from a group comprising a contact network address of said user equipment unit in said telecommunications network, and access network information data of an access network used for conveying communications signals between said user equipment unit and said telecommunications network.

5. Method according to claim 4, wherein said user authorisation query is performed by an interrogating call session control function, I-CSCF, in said telecommunications network, and wherein said service authorisation data is provided by said interrogating call session control function, I-CSCF.

6. Method according to claim 4 or 5, wherein said service authorisation data is included in said service authorisation query.

7. Method according to any of the previous claims, wherein said service policy server is identified based on information available to said user database server.

8. Method according to any of the previous claims, wherein said user database server reposits a subscriber profile for said user equipment unit, and wherein said subscriber profile comprises an indication of whether or not said service authorisation query is required to be performed.

9. Method according to any of the previous claims, as far as dependent on claim 3, wherein said service is provided by said application server to said user equipment unit only if said response of said service policy server indicates that service provisioning is allowed.

10. Method according to any of the previous claims, as far as dependent on claim 3, wherein said response comprises a service restriction indication, indicating restrictions to be imposed on provisioning of said service.

11. User database server for use in a method according to any of the previous claims, wherein said user database server comprises means configured for receiving a user authorisation query for authorizing registration of a user equipment unit in a telecommunications network, **characterized in that** said user database server further comprises means configured for performing a service authorisation query on a dedicated service policy server for authorizing use of a service provided by an application server, AS, through said user equipment unit, wherein said dedicated service policy server is an entity separate from said AS providing the service.

12. User database server according to claim 11, wherein said means for performing said service authorisation query are arranged for composing said service authorisation query based on data from said user authorisation query.

13. User database server according to any of the claims 11 or 12, further comprising means configured for repositing a subscriber profile for said user equipment unit, wherein said means for repositing said subscriber profile are arranged for repositing an indication of whether or not said service authorisation query is required to be performed.

14. Service policy server for use in a method according to any of the claims 1-10 said service policy server comprising means configured for receiving a service authorisation query from a user database server for a service provided by an application server, for authorizing use of said service provided by said application server, AS, through said user equipment unit, and for returning a service authorisation response to said user database server indicating whether or not provisioning of said service to said user equipment unit is allowed and wherein said service policy server is an entity separate from said AS providing the service.

15. Interrogating call session control function, I-CSCF, entity for use in an internet protocol, IP, multimedia subsystem, IMS, telecommunications network, said interrogating call session control function, ,I-CSCF, entity being arranged for performing a user authorisation query on a user database server for authorizing registration of a user equipment unit in said telecommunications network, **characterized in that** said interrogating call session control function, I-CSCF, entity is further arranged for providing service authorisation data to said user database server, said service authorisation data comprising a contact address of an application server in said telecommunications network for providing a service to said user equipment, and additionally said service authorization data comprising data selected from a group comprising a contact network address of said user equipment unit in said telecommunications network, and access network information data of an access network used for conveying communications signals between said user equipment unit and said telecommunications network.

## Patentansprüche

1. Verfahren zur Bereitstellung eines Dienstes durch eine Benutzergeräte, UE,-Einheit in einem Internetprotokoll, IP,-Multimedia-Subsystem, IMS,-Telekommunikationsnetzwerk, wobei der Dienst unter Verwendung eines Anwendungsservers, AS, im Telekommunikationsnetzwerk bereitgestellt wird, wobei das Verfahren einen Schritt zum Durchführen einer Benutzerautorisierungsanfrage bei einem Benutzerdatenbankserver zum Autorisieren der Anmeldung der Benutzergeräteeinheit im Telekommunikationsnetzwerk umfasst, und **dadurch gekennzeichnet, dass** das Verfahren ferner einen Schritt des Benutzerdatenbankservers zum Durchführen einer Dienstautorisierungsanfrage bei einem dedizierten Dienstrichtlinienserver zum Autorisieren der Verwendung des Dienstes durch die Benutzergeräteeinheit umfasst, wobei der dedizierte Dienstrichtlinienserver eine Entität ist, die vom AS, der den Dienst bereitstellt, getrennt ist.

2. Verfahren nach Anspruch 1, wobei die Dienstautorisierungsanfrage basierend auf Informationen erstellt wird, die während der Benutzerautorisierungsanfrage ausgetauscht werden, oder eine Kopie der Benutzerautorisierungsanfrage ist.

3. Verfahren nach einem der vorhergehenden Ansprüche, wobei das Durchführen der Dienstautorisierungsanfrage durch den Benutzerdatenbankserver die folgenden Schritte umfasst:
- Kommunizieren der Dienstautorisierungsanfrage an den Dienstrichtlinienserver;
- Verifizieren, ob Bereitstellung des Dienstes für die Benutzergeräteeinheit zulässig ist, durch den Dienstrichtlinienserver;
- Zurücksenden einer Dienstautorisierungsantwort durch den Dienstrichtlinienserver an den Benutzerdatenbankserver, wobei die Antwort angibt, ob Bereitstellung des Dienstes für die Benutzergeräteeinheit zulässig ist oder nicht.

4. Verfahren nach einem der vorhergehenden Ansprüche, wobei die Benutzerautorisierungsanfrage den Austausch von Dienstautorisierungsdaten umfasst, wobei die Dienstautorisierungsdaten aus einer Gruppe ausgewählt werden, die eine Kontakt-Netzwerkadresse der Benutzergeräteeinheit im Telekommunikationsnetzwerk und Zugangsnetzwerkinformationsdaten eines Zugangsnetzwerks umfasst, das zum Übertragen von Kommunikationssignalen zwischen der Benutzergeräteeinheit und dem Telekommunikationsnetzwerk verwendet wird.

5. Verfahren nach Anspruch 4, wobei die Benutzerautorisierungsanfrage durch eine abfragende Rufsitzungssteuerfunktion, I-CSCF, im Telekommunikationsnetzwerk durchgeführt wird, und wobei die Dienstautorisierungsdaten durch die abfragende Rufsitzungssteuerfunktion I-CSCF, bereitgestellt werden.

6. Verfahren nach Anspruch 4 oder 5, wobei die Dienstautorisierungsdaten in der Dienstautorisierungsanfrage enthalten sind.

7. Verfahren nach einem der vorhergehenden Ansprüche, wobei der Dienstrichtlinienserver basierend auf Informationen identifiziert wird, die für den Benutzerdatenbankserver verfügbar sind.

8. Verfahren nach einem der vorhergehenden Ansprüche, wobei der Benutzerdatenbankserver ein Teilnehmerprofil für die Benutzergeräteeinheit aufbewahrt, und wobei das Teilnehmerprofil eine Angabe dessen umfasst, ob die Dienstautorisierungsanfrage durchgeführt werden muss oder nicht.

9. Verfahren nach einem der vorhergehenden Ansprüche, soweit von Anspruch 3 abhängig, wobei der Dienst durch den Anwendungsserver nur dann für die Benutzergeräteeinheit bereitgestellt wird, wenn die Antwort des Dienstrichtlinienservers angibt, dass Dienstbereitstellung zulässig ist.

10. Verfahren nach einem der vorhergehenden Ansprüche, soweit von Anspruch 3 abhängig, wobei die Antwort eine Dienstbeschränkungsangabe umfasst, die Beschränkungen angibt, die der Bereitstellung des Dienstes aufzuerlegen sind.

11. Benutzerdatenbankserver zur Verwendung in einem Verfahren nach einem der vorhergehenden Ansprüche, wobei der Benutzerdatenbankserver Mittel umfasst, die zum Empfangen einer Benutzerautorisierungsanfrage zum Autorisieren der Anmeldung einer Benutzergeräteeinheit in einem Telekommunikationsnetzwerk konfiguriert sind, **dadurch gekennzeichnet, dass** der Benutzerdatenbankserver ferner Mittel umfasst, die so konfiguriert sind, dass sie eine Dienstautorisierungsanfrage bei einem dedizierten Dienstrichtlinienserver zum Autorisieren der Verwendung eines Dienstes, der von einem Anwendungsserver, AS, bereitgestellt wird, durch die Benutzergeräteeinheit durchführen, wobei der dedizierte Dienstrichtlinienserver eine Entität ist, die vom AS, der den Dienst bereitstellt, getrennt ist.

12. Benutzerdatenbankserver nach Anspruch 11, wobei die Mittel zum Durchführen der Dienstautorisierungsanfrage zum Erstellen der Dienstautorisierungsanfrage basierend auf Daten aus der Benutzerautorisierungsanfrage ausgelegt sind.

13. Benutzerdatenbankserver nach einem der Ansprüche 11 oder 12, ferner umfassend Mittel, die zum Aufbewahren eines Teilnehmerprofils für die Benutzergeräteeinheit konfiguriert sind, wobei die Mittel zum Aufbewahren des Teilnehmerprofils so ausgelegt sind, dass sie eine Angabe dessen aufbewahren, ob die Dienstautorisierungsanfrage durchgeführt werden muss oder nicht.

14. Dienstrichtlinienserver zur Verwendung in einem Verfahren nach einem der Ansprüche 1 bis 10, wobei der Dienstrichtlinienserver Mittel umfasst, die so konfiguriert sind, dass sie eine Dienstautorisierungsanfrage von einem Benutzerdatenbankserver für einen Dienst, der von einem Anwendungsserver bereitgestellt wird, zum Autorisieren der Verwendung des vom Anwendungsserver, AS, bereitgestellten Dienstes durch die Benutzergeräteeinheit empfangen und eine Dienstautorisierungsantwort an den Benutzerdatenbankserver zurücksenden, die angibt, ob Bereitstellung des Dienstes für die Benutzergeräteeinheit zulässig ist, und wobei der Dienstrichtlinienserver eine Entität ist, die vom AS, der den Dienst bereitstellt, getrennt ist.

15. Entität mit abfragender Rufsitzungssteuerfunktion, I-CSCF, zur Verwendung in einem Internetprotokoll, IP,-Multimedia-Subsystem, IMS,-Telekommunikationsnetzwerk, wobei die Entität mit abfragender Rufsitzungssteuerfunktion, I-CSCF, ferner zum Durchführen einer Benutzerautorisierungsanfrage bei einem Benutzerdatenbankserver zum Autorisieren der Anmeldung einer Benutzergeräteeinheit im Telekommunikationsnetzwerk ausgelegt ist, **dadurch gekennzeichnet, dass** die Entität mit abfragender Rufsitzungssteuerfunktion, I-CSCF, ferner zum Bereitstellen von Dienstautorisierungsdaten für den Benutzerdatenbankserver ausgelegt ist, wobei die Dienstautorisierungsdaten eine Kontaktadresse eines Anwendungsservers im Telekommunikationsnetzwerk zum Bereitstellen eines Dienstes für die Benutzergeräteeinheit umfassen, und die Dienstautorisierungsdaten zusätzlich Daten umfassen, die aus einer Gruppe ausgewählt sind, die eine Kontakt-Netzwerkadresse der Benutzergeräteeinheit im Telekommunikationsnetzwerk und Zugangsnetzwerkinformationsdaten eines Zugangsnetzwerks umfasst, das zum Übertragen von Kommunikationssignalen zwischen der Benutzergeräteeinheit und dem Telekommunikationsnetzwerk verwendet wird.

## Revendications

1. Procédé de fourniture d'un service par l'intermédiaire d'une unité d'équipement d'utilisateur, UE, dans un réseau de télécommunications de sous-système multimédia de protocole Internet, IP, IMS, dans lequel ledit service est fourni en utilisant un serveur d'application, AS, dans ledit réseau de télécommunications, ledit procédé comprenant une étape d'exécution d'une demande d'autorisation d'utilisateur sur un serveur de base de données d'utilisateurs pour autoriser un enregistrement de ladite unité d'équipement d'utilisateur dans ledit réseau de télécommunications, et **caractérisé en ce que** ledit procédé comprend en outre une étape, par ledit serveur de base de données d'utilisateurs, d'exécution d'une demande d'autorisation de service sur un serveur de politiques de service dédié pour autoriser une utilisation dudit service par l'intermédiaire de ladite unité d'équipement d'utilisateur, dans lequel ledit serveur de politiques de service dédié est une entité distincte dudit AS fournissant le service.

2. Procédé selon la revendication 1, dans lequel ladite demande d'autorisation de service est composée sur la base d'informations échangées au cours de ladite demande d'autorisation d'utilisateur ou est une copie de ladite demande d'autorisation d'utilisateur.

3. Procédé selon l'une quelconque des revendications précédentes, dans lequel l'exécution de ladite demande d'autorisation de service par ledit serveur de base de données d'utilisateurs comprend les étapes de :
- la communication de ladite demande d'autorisation de service audit serveur de politiques de service ;
- par ledit serveur de politiques de service, la vérification si la fourniture dudit service à ladite unité d'équipement d'utilisateur est autorisée ;
- par ledit serveur de politiques de service, le retour d'une réponse d'autorisation de service audit serveur de base de données d'utilisateurs, dans lequel ladite réponse indique si la fourniture dudit service à ladite unité d'équipement d'utilisateur est ou non autorisée.

4. Procédé selon l'une quelconque des revendications précédentes, dans lequel ladite demande d'autorisation d'utilisateur inclut l'échange de données d'autorisation de service, dans lequel lesdites données d'autorisation de service sont sélectionnées dans un groupe comprenant une adresse de réseau de contact de ladite unité d'équipement d'utilisateur dans ledit réseau de télécommunications, et des données d'informations de réseau d'accès d'un réseau d'accès utilisé pour transporter des signaux de communication entre ladite unité d'équipement d'utilisateur et ledit réseau de télécommunications.

5. Procédé selon la revendication 4, dans lequel ladite demande d'autorisation d'utilisateur est effectuée par une fonction de commande de session d'appel d'interrogation, I-CSCF, dans ledit réseau de télécommunications, et dans lequel lesdites données d'autorisation de service sont fournies par ladite fonction de commande de session d'appel d'interrogation, I-CSCF.

6. Procédé selon la revendication 4 ou 5, dans lequel lesdites données d'autorisation de service sont incluses dans ladite demande d'autorisation de service.

7. Procédé selon l'une quelconque des revendications précédentes, dans lequel ledit serveur de politiques de service est identifié sur la base d'informations disponibles audit serveur de base de données d'utilisateurs.

8. Procédé selon l'une quelconque des revendications précédentes, dans lequel ledit serveur de base de données d'utilisateurs contient un profil d'abonné pour ladite unité d'équipement d'utilisateur, et dans lequel ledit profil d'abonné comprend une indication indiquant s'il faut ou non effectuer ladite demande d'autorisation de service.

9. Procédé selon l'une quelconque des revendications précédentes dépendant de la revendication 3, dans lequel ledit service est fourni par ledit serveur d'application à ladite unité d'équipement d'utilisateur uniquement si ladite réponse dudit serveur de politiques de service indique qu'une fourniture de service est autorisée.

10. Procédé selon l'une quelconque des revendications précédentes dépendant de la revendication 3, dans lequel ladite réponse comprend une indication de restriction de service, indiquant des restrictions à imposer à une fourniture dudit service.

11. Serveur de base de données d'utilisateurs destiné à être utilisé dans un procédé selon l'une quelconque des revendications précédentes, dans lequel ledit serveur de base de données d'utilisateurs comprend des moyens configurés pour la réception d'une demande d'autorisation d'utilisateur pour autoriser un enregistrement d'une unité d'équipement d'utilisateur dans un réseau de télécommunications, **caractérisé en ce que** ledit serveur de base de données d'utilisateurs comprend en outre des moyens configurés pour l'exécution d'une demande d'autorisation de service sur un serveur de politiques de service dédié pour autoriser une utilisation d'un service fourni par un serveur d'application, AS, par l'intermédiaire de ladite unité d'équipement d'utilisateur, dans lequel ledit serveur de politiques de service dédié est une entité distincte dudit AS fournissant le service.

12. Serveur de base de données d'utilisateurs selon la revendication 11, dans lequel lesdits moyens pour l'exécution de ladite demande d'autorisation de service sont agencés pour la composition de ladite demande d'autorisation de service sur la base de données provenant de ladite demande d'autorisation d'utilisateur.

13. Serveur de base de données d'utilisateurs selon la revendication 11 ou 12, comprenant en outre des moyens configurés pour contenir un profil d'abonné pour ladite unité d'équipement d'utilisateur, dans lequel lesdits moyens pour contenir ledit profil d'abonné sont agencés pour contenir une indication indiquant s'il faut ou non effectuer ladite demande d'autorisation de service.

14. Serveur de politiques de service destiné à être utilisé dans un procédé selon l'une quelconque des revendications 1 à 10, ledit serveur de politiques de service comprenant des moyens configurés pour la réception d'une demande d'autorisation de service en provenance d'un serveur de base de données d'utilisateurs pour un service fourni par un serveur d'application, pour autoriser une utilisation dudit service fourni par ledit serveur d'application, AS, par l'intermédiaire de ladite unité d'équipement d'utilisateur, et pour retourner une réponse d'autorisation de service audit serveur de base de données d'utilisateurs indiquant s'il est ou non autorisé de fournir ledit service à ladite unité d'équipement d'utilisateur, et dans lequel ledit serveur de politiques de service est une entité distincte dudit AS fournissant le service.

15. Entité de fonction de commande de session d'appel d'interrogation, I-CSCF, destinée à être utilisée dans un réseau de télécommunications de sous-système multimédia de protocole Internet, IP, IMS, ladite entité de fonction de commande de session d'appel d'interrogation, I-CSCF, étant agencée pour effectuer une demande d'autorisation d'utilisateur sur un serveur de base de données d'utilisateurs pour autoriser un enregistrement d'une unité d'équipement d'utilisateur dans ledit réseau de télécommunications, **caractérisée en ce que** ladite entité de fonction de commande de session d'appel d'interrogation, I-CSCF, est en outre agencée pour fournir des données d'autorisation de service audit serveur de base de données d'utilisateurs, lesdites données d'autorisation de service comprenant une adresse de contact d'un serveur d'application dans ledit réseau de télécommunications pour fournir un service audit équipement d'utilisateur, et en outre lesdites données d'autorisation de service comprenant des données sélectionnées dans un groupe comprenant une adresse de réseau de de ladite unité d'équipement d'utilisateur dans ledit réseau de télécommunications, et des données d'informations de réseau d'accès d'un réseau d'accès utilisé pour transporter des signaux de communication entre ladite unité d'équipement d'utilisateur et ledit réseau de télécommunications.
